# EUROPEAN PATENT SPECIFICATION

(11) **EP 1 711 558 B1**
(45) Date of publication and mention of the grant of the patent: **11.06.2008**
(21) Application number: 05701615.6
(22) Date of filing: 28.01.2005
(51) Int. Cl.: C08L 25/10, C08L 23/10, A61J 1/00, C08L 53/02

(54) **SYNDIOTATIC POLYPROPYLENE COMPOSITION COMPRISING A THERMOPLASTIC ELASTOMER**
SYNDIOTAKTISCHES POLYPROPYLEN ENTHALTENDE ZUSAMMENSETZUNG MIT EINEM THERMOPLASTISCHEN ELASTOMER
-COMPOSITION DE POLYPROPYLENE SYNDIOTACTIQUE COMPRENANT UN ELASTOMERE THERMOPLASTIQUE

(30) Priority: 30.01.2004 EP 04100347
(43) Date of publication of application: 18.10.2006
(73) Proprietor: Renolit AG, 67547 Worms (DE)
(72) Inventor: KARSTEN, Petrus, NL-1602 DL ENKHUIZEN (NL); MULKENS, Edmond, NL-1931XG EGMOND AAN ZEE (NL)
(74) Representative: Wagner, Jutta
(86) International application number: PCT/EP2005/050370
(87) International publication number: WO 2005/075558

(56) References cited:
- FR-A- 2 839 976
- US-A- 6 127 043
- DATABASE WPI Section Ch, Week 199330 Derwent Publications Ltd., London, GB; Class A18, AN 1993-240111 XP002287022 & JP 05 163394 A (MITSUI TOATSU CHEM INC) 29 June 1993 (1993-06-29)
- DATABASE WPI Section Ch, Week 199623 Derwent Publications Ltd., London, GB; Class A13, AN 1996-224341 XP002287023 & JP 08 084767 A (TERUMO CORP) 2 April 1996 (1996-04-02)

## Description

The present invention relates to a polymer composition comprising a thermoplastic elastomer; to a film or tube comprising a layer including such a composition and to specific applications thereof.

Articles intended for medical applications must meet not only conventional requirements, such as good mechanical strength or low cost, but also requirements - extremely strict- peculiar to this specific field of application, such as, for example, requirements relating to the biocompatibility properties of the said articles, their ability to be subjected to a sterilization treatment, their flexibility, their transparency, their weldability, their impact strength (including as regards containers filled with liquid), the amount of substances which migrates (for example in medical (fatty) liquids) or can be extracted (for example, with hexane and/or purified water) and in some cases, their barrier properties.

Until now, commercially available articles for medical use, for example infusion or blood bags, and bags intended for the conservation of medical related fluids, have been based on vinyl chloride polymers, for example on PVC.

Although having several advantages, this type of polymer, however, has certam disadvantages, such as the need to incorporate high amounts of stabilizers therein for the purpose of improving its thermal stability or to incorporate high amounts of plasticizers therein for the purpose of obtaining sufficient flexibility. There is therefore a market demand for articles for medical applications which are devoid of chlorinated polymers.

To get such articles, it is known to start from polyolefin-based films and to weld these together (or on themselves) in order to make bags or pouches.

JP 05 163394 describes compositions comprising syndiotactic polypropylene and a block copolymer consisting of an aromatic vinyl compound polymer and a hydrogenated conjugated type polymer, which are reported to show good transparency and flexibility. Mentioned are inter alia styrene-isoprene and styrene-butadiene di and triblock copolymers.

JP 08 084767 relates to base materials for containers for medical treatment wherein polypropylene, polybutene-1 and a copolymer are the main components and a polystyrene-poly-1,2-isprene block copolymer or its hydrogenated product is used as forming layer. The propylene may be an isotactic or syndiotactic crystalline polymer that is preferably rich in randomness.

FR 2 839 976 describes compositions comprising syndiotactic polypropylene and a cyclic polyolefine. Additionally polymers which are less crystalline may be present, styrene-butadiene-styrene, styrene-ethylone-butylene-styrene and styrene-ethylene-propylene-styrene copolymers being mentioned among a multitude of others.

US 6,127,043 relates to multilayered sheets having a polymer outer layer, a polymer connecting layer and a heat-sealable polymer inner layer. At least one polymer connecting layer is made of a mixture of a polypropylene homopolymer and/or a polypropylene copolymer and at least one thermoplastic elastomer and/or a mixture of a polypropylene homopolymer and/or a polypropylene copolymer and polyisobutylene. The heat-sealable polymer inner layer, which is adjacent to the connecting layer, is made of a polypropylene homopolymer and/or a polypropylene copolymer with at least one thermoplastic elastomer. The thermplastic elastomer can be, inter alia, a styrene-ethylenelbutylene-styrene triblock polymer, a styrene-butylene-styrene diblock polymer; a styrene-ethytenelprvpylene-styrene triblock polymer; and a styrene-isoprene-styrene triblock polymer.

It is more specifically known to use polypropylene (PP) based films which include additives in order to improve some of the above mentioned properties. Such additives are often elastomers used to improve the transparency and flexibility of the PP resins. An example of such elastomers are those including styrene and isoprene and/or vinylisoprene units (hereaftercalled "SI" resins), hydrogenated or not. Among those, styrene-vinylisoprene-styrene block copolymers (SVIS) and styrene-isoprene-butadiene-styrene (SIBS) are preferred because they have an improved compatibility with PP resins, especially when they are at least partially hydrogenated. However, after a while (or after a heat treatment like heat sterilisation), it appears that films made of PP and SI resins loose their transparency, which would indicate that some phase separation appears after long term use/storage.

The applicant found that surprisingly, when choosing a syndiotactic polypropylene resin (s-PP), this long term phase separation tends to disappear. Another advantage of using s-PP over "conventional" i-PP is its lower melting point (130°C versus 165°C) which allows welding at lower temperature, while still allowing steam sterilisation at the classical temperature of 121°C.

Accordingly, the present invention relates to a polymer composition comprising a SI and a s-PP.

The SI resin used in the composition according to the present invention is generally a triblock copolymer having two polystyrene outer blocks and a midblock including isoprene and eventually other monomers and which may be partially or fully hydrogenated. The term "partially hydrogenated" means that there are still some unsaturated isoprene units left in the structure. Usually, in commercial hydrogenated SI resins, there are about 5 wt% dienes (insaturations) left or less, preferably 1 wt% or less, and most preferably, 0.5wl% or less. Fully or almost fully hydrogenated resins are preferred for stability reasons.

Examples of such resins are those commercialised by KURARAY under the trade name HYBRAR. These resins include till about 40% (in weight) of styrene which forms blocks linked together by blocks made of vinyl-isoprene-co-polyisoprene. Grades 5127 and 5125 are non-hydrogenated while grade 7125 is hydrogenated. Hydrogenated SVIS resins like HYBRAR 7125 are preferred.

Other examples of such SI resins are styrene-isoprene-butadiene-styrene resins (SIBS). Examples of such resins which give good results are those commercialised under the name KRATON^{®} G-1730, RP-6924 and RP-6917. These resins are fully or almost fully hydrogenated (i.e. they have less than 0.2 wt% of insaturations left).

The s-PP according to the present invention may be a homopolymer or a copolymer of propylene with up to 30% of a C₂-C₈ comonomer, preferably ethylene. It preferably is a polyolefin of controlled crystallinity as described in WO 00/61062. It preferably shows a softening point (or "Vicat Point") of less than 121°C (measured according to ASTM Standard D1525), at least after having been processed in appropriate conditions (which are described in WO 00/061062, incorporated herein by reference), even if the producer of the resin announces higher values. The s-PP according to the present invention thus preferably exhibit the distinguishing feature that their crystallinity can be easily reduced during their processing. This ready control of the crystallinity is advantageous in the content of the invention, in so far as it makes it possible to confer a reduced crystallinity on these s-PP resins, provided that appropriate processing conditions are used, thus increasing the transparency and the flexibility of the whole structure.

The polydispersity of the s-PP according to the present invention is advantageously less than 8 and preferably less than 4. This characteristic reflects a low dispersion of the molecular masses, which increases the separation between the melting temperature ranges and softening temperature ranges and thus makes it possible to have a more effective action on the crystallinity during the processing.

Furthermore, the melt flow index of the s-PP used is advantageously less than 12 g/10 min, preferably less than 10 g/10 min and most preferably less than 8 g/10 min (measured according to ASTM Standard D1238, under the conditions 190°C/2.16 kg for the polymers of ethylene and the copolymers of butene and under the conditions 230°C/2.16 kg for the polymers of propylene and the homopolymers of butene).

In the composition according to the present invention, the s-PP is generally present in an amount of 30% or more, or even 40% or more (in weight compared with the total weight of the blend). On the other hand, the SVIS content of the blend is generally of 5% or more, or even 10% or more. Generally, the s-PP is present in amount of 95% or less, or even 90% or less, while on the other hand, the SVIS is generally present in amount of 70% or less, or even 60% or less.

The composition according to the present invention may include other polymers and/or usual additives like pigments, stabilizers ... Especially when it is intended to be welded, it may comprise at least one not very crystalline or amorphous polyolefin chosen between ethylene-vinyl acetate (EVA), ethylene-methyl acrylate (EMA), ethylene-ethyl acrylate (EEA) or ethylene-butyl acrylate (EBA) copolymers. Among the last mentioned copolymers, only those which exhibit a content of comonomer(s) of at least 9% naturally come into consideration as additional constituents. The concentration of these copolymers is generally equal to or higher than 0.05% (in weight with relation to the entire composition), and preferably higher than 0.1%. It is generally equal to or lower than 15%, preferably than 10% and most preferably than 5%. A mixture of EVA an EMA, preferably in a total amount of at least 0.1%, or even at least 1%, but not exceeding 5%, gives good results. It makes it namely possible to make welds with very reproducible peel strengths, which is very useful for making items with a peelable seal, like multi-chamber bags or pouches including a permanent, outer seal and at least one peelable seal.

The composition according to the present invention may easily be processed in any kind of object, from a flat one (like a film or sheet) to a three dimensional one (like a container or a tube), and either into a monolayer structure or into a multilayer one.

Preferably, the present invention relates to a film or a tube comprising at least one layer including the above described composition.

The term "film" is used to denote a thin, flat structure (in the case of cast films for instance) or a tubular one (in the case of blown films for instance) which generally has a thickness of 1000 µm or less, preferably 500 µm or less, or even 250 µm or less. In practice, a thickness of 90 µm or more is suitable, or even 140 µm or more. The term "tube" is used to denote a tubular structure which generally has a wall-thickness of 200 µm or more, preferably 500 µm or more. In practice, this thickness is often lower than 2500 µm. Such tubes can serve as a port member for a medical packaging unit (like for instance a container, pouch, bag and the like).

Preferably, the composition described above is used in a multilayer structure (film or tube) which includes several layers providing specific properties like barrier properties, sealability etc. In a preferred embodiment, the composition is included in the sealing layer of the structure (film or tube). By "sealing layer" is meant a layer which actually melts during welding (either permanent or peelable seals), which is usually a surface layer and has in general the lowest melting point of the structure. It is namely so that the SI resin (as being a thermoplastic elastomer with glass transition temperatures below 0°C) is soft at ambient temperatures or above and that the s-PP has a rather low melting point so that their mixture shows excellent sealability. In this embodiment, as already explained above, the sealing layer preferably comprises additionally EVA and/or EMA, in the amounts specified above, but preferably equal to or less than 5% in weight in order not to loose transparency.

Multilayer structures (like films or tubes) according to the present invention may include at least one barrier layer comprising resins like EVOH, PA, polyester, LCP (liquid crystal polymer), ... or their mixtures. In a preferred embodiment, pure EVOH is used as barrier resin, more particularly an EVOH with an ethylene content in the range between 20 and 45 mol%, preferably between 25 and 40 mol% and most preferably around 30 mol% this to withstand steam sterilization at 121 °C/250 °F. A suitable commercial grade of EVOH is Kuraray EVAL^{™} 101B (27 mol% ethylene). In another preferred embodiment, EVOH is mixed/blended with polyamide (PA) to improve barrier properties at higher humidity. Examples of such PA resins are PA11 or PA12 (for instance Rilsan^{®}B or Rilsan^{®}A from Atofina), PA6/66 (for instance Capron^{®} CF120 ZI from BASF) or FDA 21 CFR 177.1500 and EU directive 2007/72/EC compliant PA6 (like for instance Capron^{®} from BASF, Durethan^{®} T40 from Bayer) or PA 6/12 (Zytel^{®} from Dupont). The ones which have a melting point (measured by DSC {endotherm peak temperature}) around 200°C are preferred The ones having a Vicat softening temperature (ISO306 50N;120°C/h) below 150°C are preferred as well to gain some flexibility. Yet in another preferred embodiment, a layer of EVOH is combined with at least one layer of a suitable PA (PA11, 12, 6, 6/66, 612 and the like) as mentioned above in order to get maximum transparency in combination with high barrier properties. For medium barrier films a layer of a suitable PA (PA11, 12, 6, 6/66, 612 and the like) may be included
To adhere polyolefin containing layers to such barrier layers, tie layers like for instance maleated thermoplasts (Bynel^{®} from Dupont, Admer^{®} from Mitsui, Orevac^{®} from Atofina, Priex^{®} from Solvay, ...) and/or thermoplastic elastomers (Kraton^{®} FG 1901, FG 1921, FG 1924) are used. Of particular interest is a maleated s-PP eventually blended/mixed with a maleated thermoplastic elastomer.

According to one embodiment, the film includes as barrier layer, a layer including a cyclic olefin resin (COP) which may be a thermoplastic or an elastomer, or a mixture of both. This allows to get better barrier properties against the migration of alcohols, acids and water (or vapour).

The term "COP" is understood to mean a homo- or a copolymer of a C₅ to C₁₂ cyclic monomer and/or di-cyclic monomer (dimer), which may bear side chains so as to reach a total of 5 to 30 C. Cycloolefin copolymers in general consist besides the cyclic monomer of a C₂ to C₁₀ olefin monomer. They are in general amorphous or semi cristallin plastics whose softening points and glass transition temperatures (Tg) can be adjusted over a wide temperature range by varying the proportion of comonomer. Those having a cyclic monomer content above approximately 20 wt% are relatively brittle and have a Tg above room temperature. Those having a cyclic olefin content below approximately 20 wt% are having a Tg below room temperature and are therefore elastomeric in nature (having an elongation at break of at least 50%). Of particular interest are those having a cyclic olefin content of at least 40 wt%, preferably of 50 wt% or more and most preferably those having a cyclic olefin content of 60 wt% or more and those having a cyclic olefin content of 20 wt% or less or 2% or more. Of particular interest are the ones with a Tg of 121 °C or more while they are steam sterilisable and the ones having a cyclic olefin content of less than 20 wt% while they show some cristallinity and thus having a melting point, which is advantageous for sealing and other heat treatments. The applicant found that surprisingly, when mixing a COP with a high Tg and one with a low Tg, certain properties in terms of flexibility, transparency, sterilisability and sealabilty, which are most wanted in the art for medical applications could be combined.

The basic cyclic monomer unit can be cyclopentene, cyclohexene, norbornene, dicyclopentadiene, tetracyclododecene or methyltetracyclododecene. It is preferably norbornene : 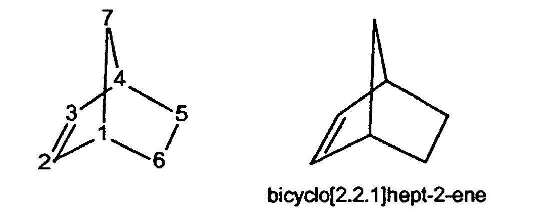 eventually bearing side chains which may be linear : 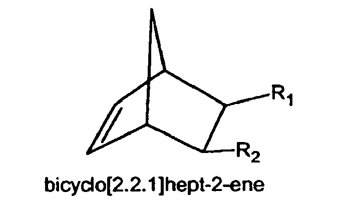 R1, R2 (=CxHy+1 with x,y = 0, 1, 2, ...)
or cyclic, like in dicyclopentadiene (which is in fact norbornene with a cyclopentadiene side chain) : 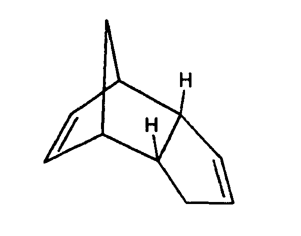 The olefin is advantageously ethylene. The COP is preferably a homo- or copolymer of norbornene with or without side chains; it is more preferably either a homopolymer of norbornene (with or without side chains, but preferably with cyclopentadiene as side chain, i.e. it is preferably a homopolymer of dicyclopentadiene), or a copolymer of norbornene (with or without side chains) and ethylene. In the latter case, the content of ethylene is advantageously between 80 and 98 wt% or below 60 wt%.

According to this embodiment, the COP may be blended with another polymer or with a hydrogenated hydrocarbon. Advantageously, the COP is blended with s-PP in order to make the film/tube more tough and ductile and impact and puncture resistant, easy to weld and to steam sterilise, but other thermoplastic polymers/elastomers and hydrocarbons may be used as well to dilute/ blend the COP. These are advantageously chosen from not very crystalline or amorphous polyolefins or hydrocarbons like the SI resins described above or those of the following types :
- olefinic copolymers composed of at least two C₂ to C₁₀ alkenes, comprising at least 60% by weight of ethylene and/or of propylene and/or of butene but not comprising more than 90% by weight of the same comonomer, or from
- olefinic copolymers comprising ethylene and/or propylene and/or butene and from 10 to 40% by weight of one or more different comonomers which are preferably chosen from C₅ to C₁₀ olefins [for instance copolymers of ethylene and 1-octene in an amount such to have linear low density polyethylene (LLDPE), very low density polyethylene (VLDPE) or ultra low density polyethylene (ULDPE)] and carboxylic acid or ester groups, for example vinyl acetate, methyl, ethyl or butyl acrylate and methyl methacrylate, or carbon monoxide, or from
- elastomeric copolymers or terpolymers with blocks of styrene and of one or more olefins (for example, copolymers of the styrene-butadiene-styrene (SBS), styrene-ethylene-butylene-styrene (SEBS) or styrene-ethylene-propylene-styrene type (SEPS), and the like), or from
- highly branched homopolymers [for example, low density polyethylene (LDPE) or medium density polyethylene (MDPE)] or from
- hydrogenated hydrocarbons like paraffin or paraffinic oil.

Advantageously, the COP comprising layer comprises at least one resin chosen between SI resins, styrene-ethylene-butylene-styrene (SEBS), eventually including styrene-ethylene-butylene (SEB), styrene-ethylene-propylene-styrene (SEPS), eventually including styrene-ethylene-propylene (SEP), and ethylene-1-octene copolymers (preferably made by metallocene technology). SI resins, SEBS and/or SEPS are preferred because they allow to make both permanent seals and pealable seals (at a lower temperature) and because they improve its impact strength. The total concentration of these resins is generally equal to or higher than 1% (in weight with relation to the entire layer composition), and preferably equal to or higher than 5%. It is generally equal to or lower than 39%, preferably than 30%.

Since COP resins are sensitive to grease, even in low amounts such as when touching or manipulating it, the COP comprising layer according to this preferred embodiment of the present invention is advantageously an internal layer, comprised in between two other layers. One of these layers may be the SI and s-PP comprising layer.

The films/tubes according to the present invention may also include a high melt temperature (>130°C), flexible, transparent outer layer (i.e. a layer on the outside of the structure, on the other side of the sealing layer). This layer may comprise a thermoplastic polyester elastomer (TPE) and/or PEBA (polyester block amide copolymers). TPE resins are composed of alternating hard poly-1,4-butanediol and/or poly(alkylene oxide)glycol, terephthalate acid or 1,4-cyclohexane-dicarboxylate and 1,4-cyclohexane-dimethanol block copolymers connected by ether and ester linkages. Examples of such TPEs are ECDEL^{®} resins (PCCE or polycyclohexane dicarboxylic acid - cyclohexane dimethanol - elastomer or copolyester based on 1,4-cyclohexanedicarboxylic acid, 1,4-cyclohexanedimethanol, and poly (oxytetramethylene) glycol) commercialised by Eastman, HYTREL^{®} resins from Dupont, LOMOD^{®} resins from GE and RITEFLEX^{®} resins from Celanese. PEBA resins are composed of polyamide blocks and at least a block of poly(alkylene oxide). Such resins are for example commercialized by Atofina chemicals PEBAX^{®}.

The above mentioned outer layer of the film according to the present invention may also comprise an SI or SEBS, SBS, ... resin (i.e. block copolymers having outer blocks of styrene and a midblock comprising at least one polyolefin or isoprene, as described above) to reduce sticking of the film to itself when stored (folded or rolled up) and/or to its packaging.

Besides the sealing layer, barrier layer and outer layers mentioned above, the films/tubes according to the invention may include at least one additional internal layer, with a melting point in between those of the sealing and outer layers and including similar polymers (chosen between one or more of SI resins, s-PP, other PP resins, elastomers, ...). For instance, it may be of interest from an economical point of view to include a layer made of scraps (i.e. production waste of films/tubes according to the present invention), as internal layer in the films/tubes described above. Whatever the number of layers, it is generally interesting to have a melting point gradient in the structure, in which the layer with the lowest melting point being the sealing layer.

According to an embodiment of the present invention, the multilayer structure (film or tube) described above comprises a more than 40% in weight of metallocene technology PO resins from which at least 30 wt% PP resins (either syndiotactic or isotactic, either homo- or copolymer, for instance with ethylene). The choice of PO resins obtained through metallocene catalyst technology improves the purity (content of extractibles and catalytic residues) of the entire structure. These metallocene PP resins are preferably s-PP and/or i-PP.

Films according to the present invention may be fully or partially (partially meaning with a window) embossed (i.e. may carry a pattern in relief) by any known technique in order to prevent blocking.

Films according to the present invention are very easy to weld and can therefore very conveniently be used to make bags. Accordingly, the present invention also relates to a bag made by welding a film as described above. Preferably, this bag is a multi-chamber bag including at least one permanent, outer seal and at least one peelable seal. By permanent seal is meant a seal which cannot be peeled easily manually and which generally shows a peel strength of at least 2000 N/m (according to ASTM/ISO F88), or even at least 3000 N/m, while a peelable seal is a seal easy to peel manually and which generally shows a peel strength of less than 2000 N/m. The optimal temperature, pressure and welding time ranges to respectively get a permanent and a peelable seal with a given structure can very easily be determined by one of ordinary skill in the art, using a few experiments. Generally, permanent and peelable seals are made using hot gas or hot tool welding, the latter being preferred.

The films, tubes and bags according to the present invention may be used for any application were their above mentioned properties are valuable. The medical field is such an application area. Bags according to the present invention are indeed particularly suitable for containing medical fluids like dialysis, infusion, nutrition, ... solutions.

Finally, the polymer composition according to the present invention can also advantageously be used in injection moulded articles. It is namely so that in most application area of the above mentioned film and bag, the latter have to be connected to some kind of apparatus (like a perfusion or dialysis apparatus for instance) and to perform this connection, often connecting parts are used, which are generally made by injection moulding. In order to have a complete system of the same polymer ingredients, and to benefit of the advantages thereof as set forth above, these injection moulded articles advantageously include the same polymer composition as the one described above.

The following examples serve to illustrate the invention. In those examples, the following polymer grades were used (s means syndiotactic; i means isotactic) :
- s-PP is grade 125,1 from Totalpetrochemicals with MFI 2 according to ASTM D1238 and made by using a metallocene catalyst.
- Hydrogenated SI block copolymer is grade Hybrar 7125 from Kuraray.
- EVA1 has MFI is around 3 and about 18 wt % VA.
- EVA2 has MFI 2 according to ASTM D1238 190°C 2.16 kg and 18 % VA.
- EMA has 16 % MA with MFI 0.3 according to ASTM D1238 190°C 2.16 kg.
- i-PP1 is grade HD601CF from Borealis.
- i-PP2 has MFI around 5.6, made by using a metallocene catalyst
- i-PP3 has MFI of 5 according to ASTM D 1238.
- i-PP4 has MFI around 2.
- i-PPE1 Random Flexible Copolymer is grade SD233CF from Borealis.
- i-PPE2 Random Flexible Copolymer elastomeric is grade Vistamaxx ®1100 from Exxonmobile, made by using a metallocene catalyst
- i-PPE3 Random Flexible Copolymer elastomeric is grade Versify® 2300 from Dow.
- i-PP copolymer is grade RD208CF from Borealis.
- COP1 has MFI of 30 (ISO 1133, 260°C, 2,16 kg)
- COP2 has MFI of 13 (ISO 1133, 260° C, 2,16 kg)
- COP3 has at least 80 wt% of Ethylene.

The haze and the clarity of the films were measured as total luminous transmittance according to ASTM D1003.

The films were made by means of coextrusion (flat die and feedblock), each layer having its own independent single screw extruder (diameter 60 and 45 mm and length of the barrel of 25 D). The temperature settings on the die, feedblock and adapters were around 210 °C. The temperature settings on the cylinder are ranging from 150 to 210 °C, depending on the polymer used. Single layer tubes were made using a 45mm single screw extruder. The tubes were made using an annular die. Extrusion temperature was around 210°C. The bags were made by hot tool welding of these films with the tubes under the following conditions : temperature is between 120 up to 150°C, pressure is 6 bar, welding time is 1.4 seconds for the circumferential weld The tubes were preheated at 80°C. Steam sterilization was performed at 121°C for 30 minutes using a steam autoclave as described in applicable USP and / or EP guidelines.

### Comparative example 1 :

A multilayer film including the following layers was coextruded : layer A (Outer layer 40 microns) comprising a blend of 50 wt % i-PP1 with 50 wt % of i-PP2, layer B (middle layer 110 microns) consisting of i-PP 75 wt % random flexible i-PPE1 copolymer and 25 wt % of i-PP2 and layer C (sealing layer 40 microns) consisting of a blend of i-PP copolymer 75 weight %, SEBS 25 weight %. The total thickness of the film was 190 microns. A bag of this film showed permanent circumferential seal at a welding temperature of 148°C. The haze of the film after sterilization with steam was 23 %.

### Comparative example 2 :

A multilayer film including the following layers was coextruded : Layer A (outer layer) : blend of 90 wt % i-PP1 and 10 wt % SEBS.
Layer B1 : i-PP3 (100 wt %).
Layer B2 : blend made of 75 wt % i-PP3 and 25 wt % SEBS.
Layer C (sealing layer) : blend made of 75 wt % i-PP3 and 22 wt % SEBS and 2 wt % EVA and 1 wt % EMA.
The total thickness of the film was 200 micron, with a layer B1 of 40 micron. Its haze after sterilization was 26 %.

### Comparative example 3 :

A multilayer film including the following layers was coextruded. Layer A (Outer layer 40 microns) comprising 100 wt % i-PP1. Layer B (sealing layer) consisting of 50 wt % random flexible i-PPE1 copolymer and 50 wt % of i-PP4. The total thickness of the film was 200 microns. A bag of this film showed permanent circumferential seal at a welding temperature of 148°C. Haze of the film after sterilization with steam was 30 %.

### Example 4 :

A film according to the present invention including the following layers was coextruded. Layer A (Outer layer 40 microns) comprising a blend of 50 % i-PP1 with 50 % of i-PP2. Layer B (middle layer 110 microns) consisting of 75 wt % random flexible i-PPE 1 copolymer and 25 wt % of i-PP2. Layer C (sealing layer 40 microns) consisting of a blend of s-PP 75 wt %, hydrogenated SI block copolymer 25 weight %. The total thickness of the film was 190 microns. A bag of this film showed permanent circumferential seal at a welding temperature of 135°C. Haze of the film after sterilization with steam was 14 %.

### Example 5 :

A film according to the present invention including the following layers was coextruded : Layer A (outer layer) : blend of 90 wt % i-PP1 and 10 wt % SEBS.
Layer B1 : i-PP3 (100 wt %)
Layer B2 : blend made of 75 wt % s-PP and 25 wt % hydrogenated SI block copolymer.
Layer C (sealing layer) : blend made of 75 wt % s-PP3 and 22 wt % hydrogenated SI block copolymer and 2 wt % EVA1 and 1 wt % EMA.
The total thickness of the film was 200 micron, with layers A and B1 both of 40 micron. Its haze after sterilization was 5 %. A bag of this film showed permanent circumferential seal at a welding temperature of 135°C

### Example 6 :

A film according to the present invention including the following layers was coextruded : Layer A (outer layer) : blend of 90 wt % i-PP1 and 10 wt % SEBS.
Layer B1 : blend of 45 wt% COP1 and 40 wt % COP2 and 15 wt % s-PP.
Layer B2 : blend made of 75 wt % s-PP and 25 wt % hydrogenated SI block copolymer.
Layer C (sealing layer) : blend made of 75 wt % s-PP3 and 22 wt % hydrogenated SI block copolymer and 2 wt % EVA2 and 1 wt % EMA.
The total thickness of the film was 200 micron, with a layers A and B1 both of 40 micron. Its haze after sterilization was 6 %. A bag of this film showed permanent circumferential seal at a welding temperature of 135°C

### Example 7:

A film according to the present invention including the following layers, was coextruded. Layer A (Outer layer 40 microns) comprising 100 wt % i-PP1. Layer B consisting of a blend of 50 wt % s-PP and 50 wt % of a hydrogenated SI block copolymer. Layer C (sealing layer) consisting of 50 wt % random flexible i-PPE1 copolymer and 50 wt % of i-PP4. The total thickness of the film was 200 microns. A bag of this film showed permanent circumferential seal at a welding temperature of 148°C. Haze of the film after sterilization with steam was 25 %.

### Example 8 :

A film according to the present invention including the following layers, was coextruded. Layer A (Outer layer 40 microns) comprising 100 wt % i-PP1. Layer B consisting of a blend of 50 wt % s-PP and 50 wt % of a hydrogenated SI block copolymer. Layer C (sealing layer) consisting of 50 wt % random flexible i-PPE2 copolymer and 50 wt % of i-PP4. The total thickness of the film was 200 microns. A bag of this film showed permanent circumferential seal at a welding temperature of 148°C. Haze of the film after sterilization with steam was 15 %.

### Example 9:

A film according to the present invention including the following layers, was coextruded. Layer A (Outer layer 40 microns) comprising 100 wt % i-PP1. Layer B consisting of a blend of 50 wt % s-PP and 50 wt % of a hydrogenated SI block copolymer. Layer C (sealing layer) consisting of 50 wt % random flexible i-PPE3 copolymer and 50 wt % of i-PP4. The total thickness of the film was 200 microns. A bag of this film showed permanent circumferential seal at a welding temperature of 148°C. Haze of the film after sterilization with steam was 19 %.

### Example 10 :

A film according to the present invention including the following layers, was coextruded. Layer A (Outer layer 40 microns) comprising 100 wt % i-PP1. Layer B consisting of a blend of 25 wt % s-PP and 25 wt % of a hydrogenated SI block copolymer, 25 wt % of random flexible i-PPE2 copolymer and 25 wt % of i-PP4. Layer C (sealing layer) consisting of 70 wt % random flexible i-PPE2 copolymer and 30 wt % of i-PP4. The total thickness of the film was 200 microns. A bag of this film showed permanent circumferential seal at a welding temperature of 142°C. Haze of the film after sterilization with steam was 19 %.

### Comparative example 11:

A multilayer film including the following layers was coextruded. Layer A (Outer layer 40 microns) comprising a blend of 50 % i-PP1 with 50 % of i-PP.
Layer B : 75 wt % I-PPE1 and 25 % wt hydrogenated SI block copolymer.
Layer C : comprising a blend as described in WO03/097739 consisting of 85 wt % COP3 and 15 wt % of s-PP. The haze after sterilization was 17 %.

### Example 12 :

A film according to the present invention including the following layers, was coextruded. Layer A (Outer layer 40 microns) comprising a blend of 50 % i-PP1 with 50 % of i-PP. Layer B : Layer B consisting of a blend of 25 wt % s-PP and 25 wt % of a hydrogenated SI block copolymer, 25 wt % of random flexible i-PPE2 copolymer and 25 wt % of i-PP4. Layer C : comprising a blend as described in WO03/097739 consisting of 85 wt % COP3 and 15 wt % of s-PP. The haze after sterilization was 6 %.

### Example 13 :

A film according to the present invention including the following layers, was coextruded. Layer A (Outer layer 40 microns) comprising a blend of 50 % i-PP1 with 50 % of i-PP. Layer B : Layer B consisting of a blend of 75 wt % s-PP and 25 wt % of a hydrogenated SI block copolymer. Layer C : comprising of COP3. The haze before sterilization was 4 %.

## Claims

1. Polymer composition comprising a syndiotactic polypropylene and a thermoplastic elastomer including styrene and isoprene units and at least one of vinylisoprene or butadiene units.

2. Polymer composition according to claim 1, in which the isoprene and/or vinylisoprene units are at least partially hydrogenated.

3. Multilayer structure at least one layer including a polymer composition according to claim 1 or 2.

4. Multilayer structure according to claim 3, which is a multilayer film or tube and in which the layer including the polymer composition according to claim 1 or 2 is a sealing layer.

5. Film or tube according to claim 4, in which the sealing layer comprises additionally ethylene vinyl acetate and/or ethylene methyl acrylate.

6. Film or tube according to claim 4 or 5, having at least one barrier layer comprising resins like ethylene vinlyl alcohol copolymer, polyamide, polyester, liquid crystal polymer or mixtures thereof, or a cyclic olefin polymer.

7. Film or tube according to any one of claims 4 to 6, having an outer layer comprising a thermoplastic polyester elastomer ad/or a polyester block polyamide.

8. Film or tube according to any one of claims 4 to 7, which comprises more than 40 % by weight of metallocene technology polyolefin resins from which at least 30 % by weight are polypropylene resins.

9. Bag made by welding a film according to anyone of claims 3 to 8.

10. Injection moulded article comprising a polymer composition according to claim 1 or 2.

## Patentansprüche

1. Polymer-Zusammensetzung umfassend ein syndiotaktisches Polypropylen und ein thermoplastisches Elastomer enthaltend Styrol-, Isopren- und mindestens eine von Vinylisopren oder Butadien-Einheiten.

2. Polymer-Zusammensetzung gemäß Anspruch 1, in welcher die Isopren- und/oder die Vinylisopren-Einheiten zumindest teilweise hydriert sind.

3. Mehrlagige Struktur mit mindestens einer Lage, die eine Polymer-Zusammensetzung nach Anspruch 1 oder 2 enthält.

4. Mehrlagige Struktur gemäß Anspruch 3, die eine mehrlagige Folie oder ein mehrlagiger Schlauch ist, in welcher/welchem die Lage enthaltend die Polymer-Zusammensetzung nach Anspruch 1 oder 2 eine Siegellage ist.

5. Folie oder Schlauch gemäß Anspruch 4, in welcher/welchem die Siegellage zusätzlich Ethylenvinylacetat und/oder Ethylenmethylacrylat umfasst.

6. Folie oder Schlauch gemäß Anspruch 4 oder 5, die/der mindestens eine Sperrlage, umfassend ein Kunstharz wie Ethylenvinylakohol-Copolymer, Polyamid, Polyester, Flüssigkristallpolymer oder Mischungen davon oder ein cyclisches Olefinpolymer, aufweist.

7. Folie oder Schlauch gemäß einem der Ansprüche 4 bis 6, die/der eine äußere Lage, umfassend ein thermoplastisches Elastomer und/oder ein Polyester-Blockpolyamid, aufweist.

8. Folie oder Schlauch gemäß einem der Ansprüche 4 bis 7, welche/welcher mehr als 40 Gew.-% eines Metallocen-Technologie-Polyolefinharzes umfasst, von dem mindestens 30 Gew.-% Polypropylenharze sind.

9. Beutel hergestellt durch Schweißen einer Folie gemäß einem der Ansprüche. 3 bis 8.

10. Spritzgussartikel umfassend eine Polymer-Zusammensetzung gemäß Anspruch 1 oder 2.

## Revendications

1. Composition polymère comprenant un polypropylène syndiotactique et un élastomère thermoplastique englobant des unités de styrène et d'isoprène et au moins, soit des unités de vinylisoprène, soit des unités de butadiène.

2. Composition polymère selon la revendication 1, dans lequel les unités d'isoprène et/ou de vinylisoprène sont hydrogénées au moins en partie.

3. Structure multicouche, au moins une couche englobant une composition polymère selon la revendication 1 ou 2.

4. Structure multicouche selon la revendication 3, à savoir un film ou un tube multicouche, et dans laquelle la couche englobant la composition polymère selon la revendication 1 ou 2 est une couche de scellement.

5. Film ou tube selon la revendication 4, dans lequel la couche de scellement comprend en outre de l'éthylène/acétate de vinyle et/ou de l'éthylène/acrylate de méthyle.

6. Film ou tube selon la revendication 4 ou 5, contenant au moins une couche barrière comprenant des résines telles qu'un polymère d'éthylène/alcool vinylique, du polyamide, du polyester, un polymère à cristaux liquides, ou leurs mélanges, ou bien un polymère d'oléfine cyclique.

7. Film ou tube selon l'une quelconque des revendications 4 à 6, possédant une couche externe comprenant un élastomère de polyester thermoplastique et/ou un polyamide de polyester séquencé.

8. Film ou tube selon l'une quelconque des revendications 4 à 7, qui comprend, à concurrence de plus de 40 % en poids, des résines de polyoléfines obtenues via une technologie à base de métallocène et dont au moins 30 % en poids représentent des résines de polypropylène.

9. Sac réalisé par soudage d'un film selon l'une quelconque des revendications 3 à 8.

10. Article moulé par injection comprenant une composition polymère selon la revendication 1 ou 2.
